# EUROPEAN PATENT APPLICATION

(11) **EP 3 331 238 A1**
(43) Date of publication of application: **06.06.2018**
(21) Application number: 15899343.6
(22) Date of filing: 12.08.2015
(51) Int. Cl.: H04N 5/45

(54) **IMAGE COMBINATION PROCESSING SYSTEM ARRANGED IN DISPLAY**

(30) Priority: 27.07.2015 CN 201510446020
(71) Applicant: Nanjing Jusha Display Technology Co., Ltd., Nanjing, Jiangsu 210029 (CN)
(72) Inventor: WANG, Wei, Nanjing Jiangsu 210029 (CN)
(74) Representative: Wynne-Jones, Lainé and James LLP
(86) International application number: PCT/CN2015/086709
(87) International publication number: WO 2017/015991

(57) **Abstract**

The present invention discloses An image blending system built in a display, including a video input module, a video routing unit, a regional image processing unit, a terminal image blending unit and a display terminal unit,
wherein the video input module comprises n video input units, and each of them has multiple video input channels and a device ID;
the terminal image blending unit identifies the type of the video input signals and version information of the video input units according to the device ID, and the video input signals are converted to high-speed serial signals through the video input units;
the video routing unit switches matrix switch array according to the instructions transmitted by the control chip of the terminal image blending unit, and then transmits high-speed serial signals from the different channels of the video input module to the corresponding regional image processing unit;
the regional image processing unit receives and stores the high-speed serial signals, and scales, crops and blend these signals, and then the processed video signals are transmitted to the terminal image blending unit;
the terminal image blending unit integrates the input video signals to high resolution signals and transmits the signals to the display terminal unit.

## Description

### Field of the Invention

The present invention relates to an image blending system built in a display.

### Background of the Invention

With the development of display technology, the size of the display device is increasing, and the resolution is becoming higher and higher, which allows video signals of multiple input channels to be displayed on one monitor.

Currently, to make video signals of multiple input channels be displayed on one monitor, it is to connect an external video matrix to the display device, and a common monitor is needed to operate and control the video matrix. This method has the disadvantages of high cost, the complicated operation in actual use and lack of convenience.

### Summary of the Invention

In order to solve the above problems, the present invention provides an image blending system built in a display.

The present invention adopts the following technical solutions:
An image blending system built in a display, which includes a video input module, a video routing unit, a regional image processing unit, a terminal image blending unit and a display terminal unit,
wherein the video input module comprises n video input units, and each of them has several video input channels and a device ID;
the terminal image blending unit identifies the type of the video input signals and version information of the video input units according to the device ID, and the video input signals are converted to high-speed serial signals through the video input units;
the video routing unit switches matrix switch array according to the instructions transmitted by the control chip of the terminal image blending unit, and then transmits high-speed serial signals from the different channels of the video input module to the corresponding regional image processing unit;
the regional image processing unit receives and stores the high-speed serial signals, scales and crops these signals, then the processed video signals are transmitted to the terminal image blending unit;
the terminal image blending unit integrates the input video signals to high resolution signals and transmits the signals to the display terminal unit.

Further, the video input signal formats support VGA, HDMI, DVI, SDI.

Further, the input video signals are integrated through the terminal image blending unit to signals of 4K2K resolution displayed on the display terminal unit.

Further, the input video signals are integrated through the terminal image blending unit to signals of 8K4K resolutiondisplayed on the display terminal unit.

Further, up to 256 windows can be displayed on the display terminal unit.

The present invention has the following beneficial effects:
(1) Multiple video signals of different video input channels can be displayed on one monitor;
(2) Medical image processing for each input signal can be achieved;
(3) The image blending unit was built in the display device, such that it's easy to operate;
(4) The display device manufactured according to the present invention integrates an image blending unit inside itself, which means the display device with image blending system, there's no need to connect external video matrix to achieve multi-windows display.

### Brief Description of the Drawings

FIG. 1 is the block diagram of an image blending system built in a display according to the present invention.
FIG. 2 is the regional distribution diagram on display terminal of a regional image processing unit consisting of four regional image processing modules according to the present invention.
FIG. 3 is a layout of multi-windows display of the present invention.
FIG. 4 is another layout of multi-windows display of the present invention.

### The Mode of Carrying Out the Invention

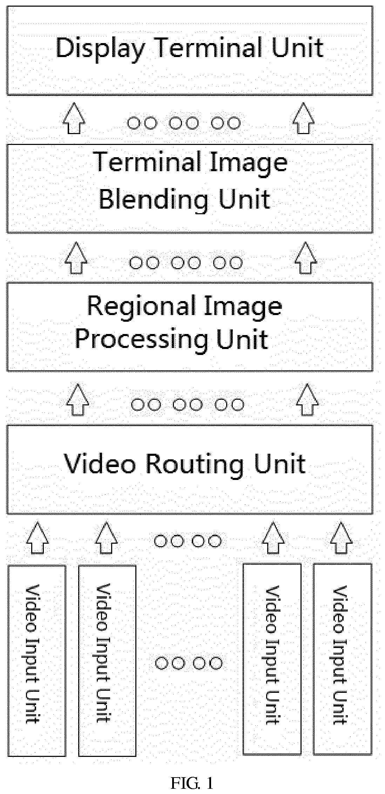

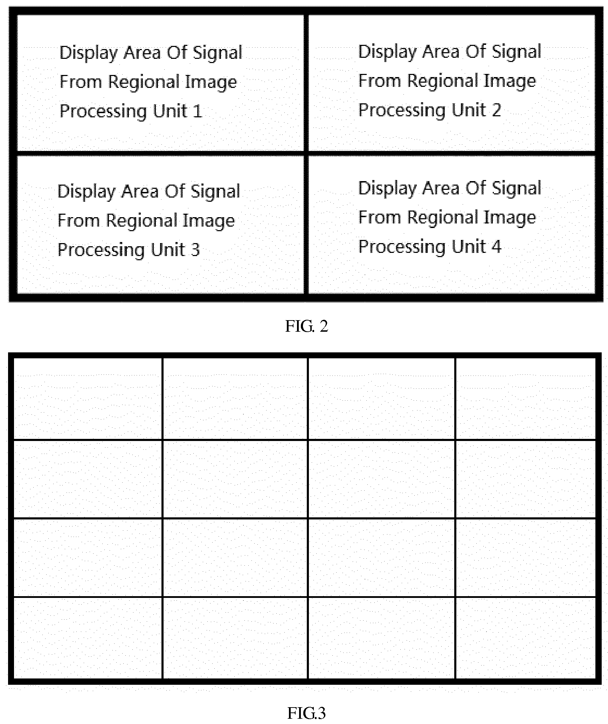

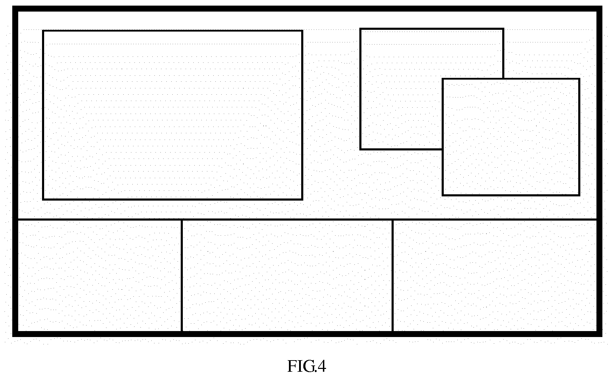

Please refer to FIG. 1 to FIG. 4, the present invention provides an image blending system built in a display, which includes a video input module, a video routing unit, a regional image processing unit, a terminal image blending unit and a display terminal unit. The video input module comprises n video input units, and each video input unit can be replaced. The video input units support a variety of video formats, such as VGA, HDMI, DVI, SDI, etc., each of them has a device ID, and the terminal image blending unit identifies the input signal type, version information and the like of the video input unit according to the device ID. Each of the video input units has several input channels, and the video input units can do the medical image processing for every input video signal. The video input signals are converted to high-speed serial signals through the video input units. The video routing unit switches matrix switch array according to the instructions transmitted by the control chip of the terminal image blending unit, and then transmits high-speed serial signals from the different channels of the video input module to the corresponding regional image processing unit. The regional image processing unit consists of several regional image processing modules. Each regional image processing module can handle high-speed serial signals from multiple channels. The regional image processing modules receive and store the high-speed serial signals, and scale, crop and blend these signals. Thereafter, the processed video signals are transmitted to the terminal image blending unit according to the layout requirements. The terminal image blending unit integrates the received m-way high-definition video signals into 4K2K (even up to 8K4K) signals, and send them to the display terminal unit. The display terminal unit is a monitor. Up to 256 windows can be displayed on the display terminal. The layout of windows is flexible. These windows can be tiled and superimposed. One window can be displayed across several regions. Different windows can display the input signals from the same or different channels. The entire screen also can display a background base picture, which does not occupy the display channel.

The present invention provides an image blending system built in a display, and each image window can display the same image signals, or different image signals. Each image window can be tiled or stacked, and the entire screen can display a background base picture, which does not occupy the display channel.

The above said is only certain preferred embodiments of the present invention, and it should be noted that a person skilled in the art may make some modifications without departing from the principles of the present invention, which should be deemed to fall into the scope of the present invention.

## Claims

1. An image blending system built in a display, including a video input module, a video routing unit, a regional image processing unit, a terminal image blending unit and a display terminal unit,
wherein the video input module comprises n video input units, and each of them has multiple video input channels and a device ID;
the terminal image blending unit identifies the type of the video input signals and version information of the video input units according to the device ID, and the video input signals are converted to high-speed serial signals through the video input units;
the video routing unit switches matrix switch array according to the instructions transmitted by the control chip of the terminal image blending unit, and then transmits high-speed serial signals from the different channels of the video input module to the corresponding regional image processing unit;
the regional image processing unit receives and stores the high-speed serial signals, and scales, crops and blend these signals, and then the processed video signals are transmitted to the terminal image blending unit;
the terminal image blending unit integrates the input video signals to high resolution signals and transmits the signals to the display terminal unit.

2. The image blending system as described in claim 1, wherein the input video signals support VGA, HDMI, DVI, SDI formats.

3. The image blending system as described in claim 2, wherein the terminal image blending unit integrates the video input signals to 4K2K resolution signals displayed on the display terminal unit.

4. The image blending system as described in claim 2, wherein the terminal image blending unit integrates the video input signals to 8K4K resolution signals displayed on the display terminal unit.

5. The image blending system as described inclaim 3 or claim 4, wherein up to 256 windows can be displayed on the display terminal unit.
